# EUROPÄISCHE PATENTSCHRIFT

(11) **EP 4 502 443 B1**
(45) Veröffentlichungstag und Bekanntmachung des Hinweises auf die Patenterteilung: **25.03.2026**
(21) Anmeldenummer: 24188922.9
(22) Anmeldetag: 16.07.2024
(51) Int. Cl.: F16L 5/04, H02G 3/22, E04B 1/94, H02G 3/04

(54) **BRANDABSCHOTTUNG FÜR LEITUNGEN IN GEBÄUDEN**
FIRE BARRIER FOR CONDUITS IN BUILDINGS
CLOISON COUPE-FEU POUR CONDUITES DANS DES BÂTIMENTS

(30) Priorität: 04.08.2023 DE 202023104429 U
(43) Veröffentlichungstag der Anmeldung: 05.02.2025
(73) Patentinhaber: LINDNER SE, 94424 Arnstorf (DE)
(72) Erfinder: Frank, Oliver, 94424 Arnstorf (DE); Mehlsteibl, Markus, 84326 Falkenberg (DE)
(74) Vertreter: Rings, Rolf

(56) Entgegenhaltungen:
- DE-A1- 2 162 251
- DE-A1- 3 726 829
- US-B2- 11 072 924
- US-B2- 9 404 251

## Beschreibung

Die vorliegende Erfindung betrifft eine Brandabschottung für Hohlräume oder Durchlässe in Gebäuden oder Gebäudewänden, beispielsweise in Hohlräumen von Doppelbodensystemen, in welchen Leitungen, Rohre oder Kanäle durch Wände oder Abtrennungen hindurchgeführt werden sollen. Bei Gebäuden, in welchen Leitungen über verschiedene Räume hinweg verlegt werden müssen, sind in den Zwischenbereichen, nämlich bei den Gebäudewänden oder im Bereich von Türen, sogenannte Brandabschottungen erforderlich, um eine den Vorschriften des Brandschutzes genügende Baukonstruktion bereitzustellen. Die Durchführung von Leitungen, Rohren oder Kanälen in Gebäudewänden oder in Bodenhohlräumen wird herkömmlicherweise mit Durchbrüchen oder Bohröffnungen realisiert, welche entsprechend dem Durchmesser und der Anzahl von Leitungen jeweils separat in den Gebäudewänden aufwändig hergestellt werden. Nach Hindurchführen der Leitungen werden anschließend die dabei entstehenden Zwischenräume zwischen den Leitungen und den hergestellten Durchbrüchen oder Bohrlöchern wieder verfüllt, beispielsweise mittels Zement oder Bauschaum. Dabei besteht die Gefahr, dass im Brandfall die Durchbrüche zu einem erhöhten Brandrisiko führen können. Daher wurden im Stand der Technik verschiedene Systeme und Brandabschottungen für solche Gebäudedurchbrüche für Leitungen, Rohre oder Kanäle bereitgestellt.

Beispielsweise wurde im Stand der Technik vorgeschlagen, die Durchbrüche oder Bohrungen in den Wänden um Rohre herum mit einem im Brandfall aufschäumenden Material im Abschottbereich für den Brandschutz auszufüllen, wie in DE 20 2013 100 836 U1 beschrieben. Ferner wurden für diese Zwecke auch vorgefertigte Brandschutzplatten verwendet, die in den Gebäudedurchbrüchen eingesetzt werden und in welchen in dem Plattenmaterial oder Brandschutzmaterial vorgesehene Öffnungen speziell je nach Bedarf herausgearbeitet werden können. Diese bekannten Brandabschottungen haben jedoch den Nachteil, dass sie in bestimmten Anwendungsfällen nicht hinreichend statisch stabil sind. Die Durchlässe von Hohlräumen in Doppelböden oder ähnlichem müssen auch eine hohe statische Festigkeit im Bereich der Brandabschottung haben, damit nicht eine weitere Konstruktion zur Abstützung erforderlich ist. Ferner haben die bisher bekannten derartigen Systeme den Nachteil, dass sie konstruktiv recht komplex und in der Anwendung recht aufwendig und damit teuer sind, da bei den aufschäumenden Brandschutzmaterialien oder den Brandschutzplatten mit vorgefertigten Löchern die Anordnung von verschiedenartigen und an verschiedenen Positionen vorgesehenen Leitungen oft schwierig und mühsam ist. Das Dokument US 11 072 924 B2 offenbart eine Brandabschottung, wie sie aus dem Stand der Technik bekannt ist, wobei ein Rahmen (17, 18, Fig. 7) aus Mineralfasern und einem Bindemittel bestehen.

Vor diesem Hintergrund ist es die Aufgabe der vorliegenden Erfindung, eine Brandabschottung für Durchlässe von Leitungen, Rohren, Kanälen etc. für Hohlräume oder Durchlässe in Gebäuden bereitzustellen, mit welcher eine hohe statische Festigkeit gleichzeitig mit einer verbesserten Flexibilität in der Anzahl, Form und Größe sowie Position von Durchlässen für Leitungen erreicht wird, bei gleichzeitig möglichst geringem Aufwand in dem Aufbau und geringeren Kosten in der Herstellung derartiger Brandabschottungen.

Diese Aufgabe wird mit einer Brandabschottung mit den Merkmalen nach Anspruch 1 gelöst. Vorteilhafte Ausgestaltungen und Weiterbildungen der Erfindung sind Gegenstand der abhängigen Ansprüche.

Erfindungsgemäß wird eine Brandabschottung für Hohlräume oder Durchlässe in Gebäuden, Gebäudewänden oder -decken, insbesondere Bodenhohlräumen von Doppelböden, zum Durchführen von Leitungen, Kabeln, Kanälen oder Rohren vorgeschlagen, mit mindestens einem modulförmigen, quaderartigen Brandschutzstein, in welchem auf die Leitungen im Durchmesser angepasste Öffnungen in einer je nach Bedarf erforderlichen Form, Anzahl und Position herstellbar sind, und mit einem äußeren Rahmen, welcher den oder die Brandschutzsteine mindestens an drei Seiten abschließt und aufnimmt, dadurch gekennzeichnet, dass der Rahmen aus auf Stoß oder Kante direkt miteinander verbundenen Platten mindestens seitlich und von oben her gebildet ist, welche eine höhere Biegesteifigkeit und/oder Druckfestigkeit als die darin vorgesehenen Brandschutzsteine zur statischen Abstützung aufweisen, wobei horizontale Platten mindestens bereichsweise auf vertikalen Platten aufliegen, und dass sowohl der Rahmen als auch die Brandschutzsteine aus einem nicht-metallischen feuerfesten Material, insbesondere einem mineralischen Werkstoff, bestehen.

Die erfindungsgemäße Brandabschottung ist somit im Wesentlichen aus zwei Bestandteilen gebildet, nämlich einerseits aus einem Rahmen, welcher mindestens an einer Oberseite und den seitlichen Seiten aus Plattenelementen hergestellt ist, welche als horizontale Platten mindestens bereichsweise auf den vertikalen Platten aufliegen und zum Anderen aus einem oder mehreren modulartigen, quaderförmigen Brandschutzsteinen, welche im Innern des Rahmens zum Verschließen der Durchlässe bei hohem Feuerschutz angeordnet sind bei Einbindung von Leitungen, Kabeln, Rohren oder Ähnlichem. Dafür können in dem Brandschutzstein oder den mehreren Brandschutzsteinen, welche modulförmig aneinander gestapelt in den Rahmen eingepasst werden, entsprechend den notwendigen Abmessungen passende Bohrungen. Löcher oder Durchlässe erzeugt werden. Nach Zusammensetzen der modulartig angeordneten Brandschutzsteinen und innerhalb des Rahmens aus vertikalen und horizontalen Platten wird die erfindungsgemäße Brandabschottung so realisiert, dass eine bündige und dichtschließende Anordnung innerhalb eines Durchbruchs von Gebäuden, beispielsweise im Bereich ein von Türen bei Doppelböden gegeben ist und die Abschottung so gewährleistet ist. Die Brandabschottung nach der Erfindung erfordert wenig Teile und Montageaufwand, hat eine relativ hohe Festigkeit und ist dennoch leicht individuell an die jeweiligen Gegebenheiten anpassbar.

Die Elemente der Brandabschottung, nämlich die Brandschutzsteine sowie die den Rahmen bildenden Platten sind jeweils aus mindestens feuerhemmenden oder feuerbeständigen nichtmetallischen Materialien realisiert. Solche nichtmetallische, feuerfeste Materialen sind dem Fachmann des Gebietes bekannt. Bei einer Ausgestaltung der erfindungsgemäßen Brandabschottung ist der Rahmen nicht nur von oben und den Seiten her gebildet, sondern allseitig um die modulartig angeordneten Brandschutzsteine herum gebildet. Das heißt nicht nur eine torartige oder brückenartige Form der äußeren Platten des Rahmens ist vorhanden, sondern eine allseitig die Brandschutzsteine umgebende Rahmenform mit auch einem bodenseitigen unteren Plattenelement. Die vertikalen Platten sind dabei mindestens bereichsweise von den horizontalen Platten überdeckt, sodass sie eine Abstützung und Auflage darauf bilden. So kann eine hohe Festigkeit der Brandabschottung für die Anwendungen im Bodenbereich alleine mit den Rahmenplatten hergestellt werden. Es sind also nicht notwendigerweise zusätzliche Befestigungsmittel zwischen den horizontalen und vertikalen Platten erforderlich, solange die Brandschutzsteine sicher im Innern der Rahmen gehalten sind. Mit zusätzlichen Befestigungsmitteln, wie Schrauben, können die Platten auch fest aneinander fixiert werden.

Gemäß einem Aspekt der Erfindung liegt die Bruchlast und Druckfestigkeit der Brandabschottung, welche maßgeblich von den Platten des Rahmens bestimmt wird, in einem Bereich gemessen nach DIN 4103 von 2,5 kN bis 6 kN, insbesondere vorzugsweise gemäß der Erfindung ≥ 4 kN nach dieser Norm. Auch im Bodenbereich eingebauten Brandabschottungen haben somit eine hinreichende Festigkeit und Eigensteifigkeit für den Anbau und die Anbringung von weiteren Elementen, wie z. B. Durchgangstüren, Bodenbelägen oder Ähnlichem. Die Brandabschottung ist somit nicht nur flexibel und leicht verarbeitbar und anbringbar, sondern bietet auch eine hinreichende Festigkeit durch ihre spezielle Konstruktion aus Rahmen und Modulsteinen. Für die Weiterverarbeitung sind damit keine extra Träger oder Plattenelemente aus Metall erforderlich, um die Brandabschottung vor einer Beschädigung bei hohen Belastungen zu schützen.

Da erfindungsgemäß mindestens ein modulförmiger, quaderartiger Brandschutzstein im Innern eines Rahmens vorhanden ist, können die Durchbrüche in dem quaderförmigen Brandschutzstein durch einfaches Bohren z. B. hergestellt werden. Es ist auch möglich vorgefertigte quaderförmige Brandschutzsteine zu verwenden, die dann modulartig aneinander angebracht werden. Eine Herstellung der Durchlässe für die entsprechenden Leitungen, Rohre etc. mit unterschiedlichen Durchmessern ist damit leicht möglich. Es ist auch nicht erforderlich, die Brandabschottung anschließend mit Schäumen oder aufwendig anzubringendem Mauerputz wieder zu verschließen. Die Brandabschottung bietet selbst schon eine ausreichende ebene abgedichtete Oberfläche sowohl zur Oberseite hin als auch zu den seitlichen Seiten, sodass die Einbindung in bestehende Mauerdurchlässe oder Bodendurchlässe bzw. Deckendurchbrüche leicht realisierbar ist.

Gemäße einem vorteilhaften Aspekt der Erfindung weist die Brandabschottung Platten des Rahmens derart auf, dass zwischen den vertikalen Platten des Rahmens ein Abstand im Bereich von s 500 mm gegeben ist, in welchem dann die modulförmigen Brandschutzsteine eingesetzt sind. Ein solcher Maximalabstand hat den Vorteil, dass eine ausreichende Druckfestigkeit der Brandabschottung gegeben ist, auch wenn die Materialien der Brandschutzsteine so gewählt sind, dass sie nicht eine ausreichende Steifigkeit selbst haben. Nach einem vorteilhaften diesbezüglichen Aspekt liegt der Abstand zwischen vertikalen Platten der Rahmen der Brandabschottung nach der Erfindung im Bereich von 350 mm bis 450 mm. Weiter vorzugsweise liegt der Abstand insbesondere bei 385 mm, was nach den Versuchen der Erfinder für eine ausreichende Stabilität auch bei Türdurchgängen mit beispielsweise Glastüren oder Doppeltüren etc. ermöglicht.

Eine vorteilhafte Form der Brandschutzabschottung weist eine Bautiefe, das heißt eine in der Horizontalen in Breitenrichtung gesehene Tiefe in einem Bereich von 150 mm bis 250 mm, vorzugsweise insbesondere 200 mm auf. Die vertikalen und horizontalen Platten der Rahmen der Brandabschottung sind somit in einem Bereich einer Bautiefe, welche die Anbindung an handelsübliche Doppelbodenplatten ermöglicht und eine vollständige Überbrückung eines Durchlasses mit einer Brandabschottung nach der Erfindung auch von Mauern oder dickeren Wandbereichen in solchen Durchlässen oder Durchgängen von Gebäudetüren oder Ähnlichem erlaubt.

Gemäß einer vorteilhaften Ausgestaltung der Erfindung sind die Platten des Rahmens, nämlich die vertikalen zur statischen Abstützung dienenden Platten und die horizontal darüberliegenden Platten auf der Oberseite oder der Unterseite des Rahmens, miteinander verbunden, beispielsweise über Verbindungsmittel wie Schrauben, Nägel oder Ähnlichem. Ferner sind nach der Erfindung auch die modulförmig in dem Rahmen eingesetzten Brandschutzsteine luftdicht miteinander verbunden, insbesondere über dafür geeignete Verbindungsmittel wie Kleber, Zement oder Kitt. Eine vollständige und luftdichte Abschottung mit der Brandabschottung nach der Erfindung ist damit möglich. Ein Bauschaum oder eine Versiegelung von den Außenflächen der Brandabschottung ist damit dann nicht mehr erforderlich.

Gemäß einer weiteren vorteilhaften Ausgestaltung der Erfindung weisen die Platten des Rahmens, das heißt die vertikalen Platten und die mindestens eine horizontale Platte an der Oberseite, welche darauf überdeckend angeordnet ist, einen mehrschichtigen sandwichförmigen Aufbau mit einer Schicht aus Calciumsulfat in der Mitte über mindestens 80 % der Dicke auf. Die Sandwichform ist somit derart gebildet, dass im Innern der Platten sich eine Calciumsulfat-Lage befindet, während an den beiden Außenseiten eine andere Materialform, beispielsweise ein Karton, ein Papier oder ein Kunststoff vorhanden ist. Die Sandwichform hat den Vorteil, dass an der Außenseite der Platten des Rahmens eine weitgehend ebene Oberfläche für die weitere Anbindung und Anbringung von Fußböden, Platten für Fußböden, Doppelbodenelement oder auch Rahmen für Türen oder Glaswände oder Ähnliches vorhanden ist, während die innere Struktur der Platten weitgehend feuerfest ist und eine gute statische Stabilität der gesamten Brandabschottung bietet. Die Platten des Rahmens bieten eine hinreichende Festigkeit gegenüber Druck und Biegung, sodass eine hinreichend stabile und statisch in sich wirksame Konstruktion der Brandabschottung im Zusammenwirken mit den im Innern eingefügten Brandschutzsteinen bereitgestellt wird. Auch lässt sich mit solch einer Sandwichform eine leichte Anpassung an unterschiedliche Abmessung und bauliche Gegebenheiten erzielen. Die so gebildeten Platten lassen sich einfach zusägen und in dem entsprechenden Anwendungsfalls jeweils an die Gegebenheiten insbesondere der Breite, Tiefe oder Länge leicht anpassen.

Gemäß einer weiteren vorteilhaften Ausgestaltung der Erfindung haben die Platten des Rahmens der erfindungsgemäßen Brandabschottung eine materialbezogene Zusammensetzung mit einer niedrigeren Brandschutzklasse als derjenigen des mindestens einen Brandschutzsteins, welcher im Innern des Rahmens eingefügt ist. Der flächenmäßig größere Teil der Brandschutzsteine der Brandabschottung ist damit also mit einer recht hohen Feuerklasse oder Brandschutzklasse realisiert, während die im gesamten Aufbau eher einen kleineren Teil der Gesamtfläche ausmachenden Platten des Rahmens auch mit einer geringeren Brandschutzklasse und deswegen einem auch kostengünstigeren Material bei der noch hinreichender statischer Festigkeit hinsichtlich Druckbeanspruchungen und Biegesteifigkeit realisiert sein können. Eine Brandschutzklasse oder Feuerfestigkeit der Elemente wird erfindungsgemäß gemessen nach den Normen DIN 4102 und EN 13501, welche für derartige Bauelemente und Brandabschottungen zutreffend sind. Die Brandschutzklasse nach dieser Norm der Brandschutzsteine kann beispielsweise bei F90 oder F120 liegen, während diejenige des Rahmens und seiner Platten darunter liegen kann, beispielsweise bei F60 oder sogar F30, wobei dies nicht beschränkend für die Erfindung ist, wie sie allgemeiner in den Ansprüchen definiert ist. Mit solch einer Konstruktion wird insgesamt eine sehr hohe Feuerfestigkeit und Brandschutzzulassungsfähigkeit der erfindungsgemäßen Brandabschottungen gewährleistet, sodass sie auch für mit Feuerrisiko behafteten und solche Brandschutzvorschriften notwendige Bauten und Räume eingesetzt werden kann.

Gemäß einer weiteren vorteilhaften Ausgestaltung der Erfindung ist mindestens ein gebäudeseitig fixiertes Profil zur Fixierung des Rahmens in einer im Querschnitt gesehenen U- oder H-Form vorgesehen, welches vorzugsweise höhen- oder tiefenverstellbar zur Anpassung der Form und Position des Rahmens ist. Ein Profil kann aus einem Metallprofil in U-Form oder H-Form im Querschnitt vorgesehen sein, dass mit einem Höhenverstellmechanismus, beispielsweise über Schrauben oder Schraublöcher-Reihen versehen ist. Das am Gebäude fixierte Profil kann entweder seitlich an einer Wand oder einem Rand eines Durchbruchs in einer Gebäudewand angebracht sein. Vorzugsweise ist nach der Erfindung das Profil mit der Höhenverstellmöglichkeit an einem Boden fest fixiert, sodass etwaige Höhenunterschiede gegenüber den Abmessungen für die geforderte Form der Brandabschottung ausgeglichen werden können. Dies hat Vorteile, wenn beispielsweise eine exakte Anpassung an ein Doppelbodensystem in einem Hohlraum im Bodenbereich realisiert werden soll. Die Fixierung des Profils für den Rahmen oder insgesamt der Brandabschottung selbst kann über herkömmliche Schraubbefestigungen oder Ähnliches erfolgen. Mit dieser Maßnahme können standardisierte Formen von Rahmen für die erfindungsgemäße Brandabschottung mit vordefinierten Standardmaßen verwendet werden und eine Anpassung vor Ort für etwaige Unebenheiten an dem darunterliegenden Grund kann dennoch leicht vorgenommen werden. Die Brandabschottung ist trotzdem sicher fixiert und mit ausreichender Festigkeit auch statisch wirksam für eine Abstützung der darüberliegenden Einbauelemente, wie Türrahmen von Zwischentüren, Gebäudeelementen oder Bodenplatten eines Doppelbodensystems etc..

Gemäß einer weiteren vorteilhaften Ausgestaltung der Erfindung ist der Rahmen mit Platten mit einer Dicke von mindestens 40 mm für die horizontal eingebauten Platten gebildet, wobei die Dicke von vertikalen Platten demgegenüber geringer ist. Die vertikal angeordneten Platten des Rahmens, welche als Abstützung für die darüber aufgelegten horizontal eingebauten Platten dienen, sind damit von einer geringeren Dicke als der angegebenen Mindestdicke für die horizontalen Platten realisiert. Die horizontalen Platten haben dafür in dem Bereich von einer Überbrückung von herkömmlichen Brandabschottung von beispielsweise einem Abstand zwischen vertikalen, stützenden Platten des Rahmens im Bereich von 350 mm und 450 mm. Nach Untersuchungen der Erfinder hat sich bei einer Mindestdicke von 40 mm für die horizontalen Platten der Rahmen der Brandabschottung eine hinreichende Festigkeit für sämtliche Anwendungsfälle in dem Bereich solcher Brandabschottungen in Gebäudezwischenräumen, beispielsweise Türdurchbrüchen, gezeigt. Bei den vertikalen Platten genügt auch eine geringere Dicke, da die Belastungen in Längsrichtung eingeleitet werden.

Gemäß einer weiteren vorteilhaften Ausgestaltung der Erfindung ist/sind der oder die Brandschutzstein/e der Brandabschottung aus modulförmig stapelbaren und anpassbaren Quadern aus insbesondere porösem Material gebildet, welche mit Durchlässen oder Öffnungen für die Leitungen versehen sind oder flexibel je nach Bedarf versehen werden können. Die modulartigen Brandschutzsteine sind somit aus einem Material, in welches leicht in der Form, Größe und Anzahl unterschiedliche Durchbrüche oder Bohrungen eingepasst werden können, je nachdem welche Kabel, Kanäle oder Leitungen im speziellen Anwendungsfall hindurchzuführen sind durch die Brandabschottung nach der Erfindung. So können beispielsweise in einzelnen Brandschutzsteinen entsprechende Löcher mit den Außenabmessungen von Kabelkanälen angebracht werden oder es kann an zwei aneinander angrenzende modulartige zusammengesetzten Brandschutzsteinen jeweils eine halbe Öffnung dafür seitlich in den Steinen ausgearbeitet werden. Anschließend werden die Brandschutzsteine zusammengefügt und mit entsprechenden Verbindungsmitteln wie Kitt oder Zement verbunden bzw. bei ausreichender Dichtigkeit auch einfach aneinandergefügt. Dies hängt von der Materialart der Brandschutzsteine ab und kann im Rahmen der Erfindung entsprechend variiert werden. Wesentlich für die Erfindung ist lediglich, dass die Brandschutzsteine modulförmig aneinander anpassbar und stapelbar sind und sicher und feuerfest bzw. rauchdicht einen Verschluss von Öffnungen oder Durchbrüchen in Gebäudewänden für die Anbringung derartiger Kabel und Rohre mit hoher Brandschutzklasse, insbesondere einer Brandschutzklasse von F90 oder größer gemäß DIN 4102 ermöglichen.

Gemäß einer weiteren vorteilhaften Ausgestaltung der Erfindung weisen die äußeren Oberflächen des Rahmens der Brandabschottung eine durchgängige im Wesentlichen glatte und ebene Fläche zur Anbindung an Bodensysteme oder Bodenflächen, insbesondere Doppelböden in Türdurchgängen oder Ähnlichem, auf. Die Brandabschottung nach der Erfindung kann auf diese Weise direkt zum Einbau in vorhandene rechteckige Durchlässe in Zwischenräumen oder Wänden von Gebäuden verwendet werden. Eine Anpassung oder Einbindung durch weitere bauliche Maßnahmen, wie z. B. Mauersteinen, Bodenleisten, Tragschienen oder Ähnliches, ist damit nicht erforderlich. Eine Montage von weiteren Bauteilen, wie Türrahmen, Doppelbodenplatten oder Ähnlichem, kann dennoch direkt auf der Brandabschottung erfolgen, da im Wesentlichen glatte bzw. ebene Oberfläche sowohl an den Oberseiten, der Unterseite als auch der Seiten zur rechten und linken Anbindung an Mauerwerk vorhanden ist.

Weitere Vorteile, Merkmale und Aspekte der Erfindung werden mehr im Detail anhand von mehreren Ausführungsbeispielen und unter Bezugnahme auf die beigefügten Zeichnungen im Folgenden erläutert. In den Zeichnungen zeigen:
- Fig. 1: eine perspektivische Ansicht eines ersten Ausführungsbeispiels einer erfindungsgemäßen Brandabschottung für Leitungen, Kanäle oder Rohre im Anwendungsfall eines Doppelbodens unterhalb einer Durchgangsdoppeltür in einem Gebäude;
- Fig. 2: eine Draufsicht eines zweiten Ausführungsbeispiels einer erfindungsgemäßen Brandabschottung für Leitungen im Anwendungsfall eines Durchlasses in einer Gebäudewand mit vierseitigem Rahmen; und
- Fig. 3: eine auszugsweise Draufsicht eines weiteren Ausführungsbeispiels einer erfindungsgemäßen Brandabschottung im Bereich von einem Gebäudeboden für Leitungen mit einem dreiseitig vorgesehenen Rahmen aus Platten und einem Profil zur Bodenfixierung mit Höhenverstellbarkeit.

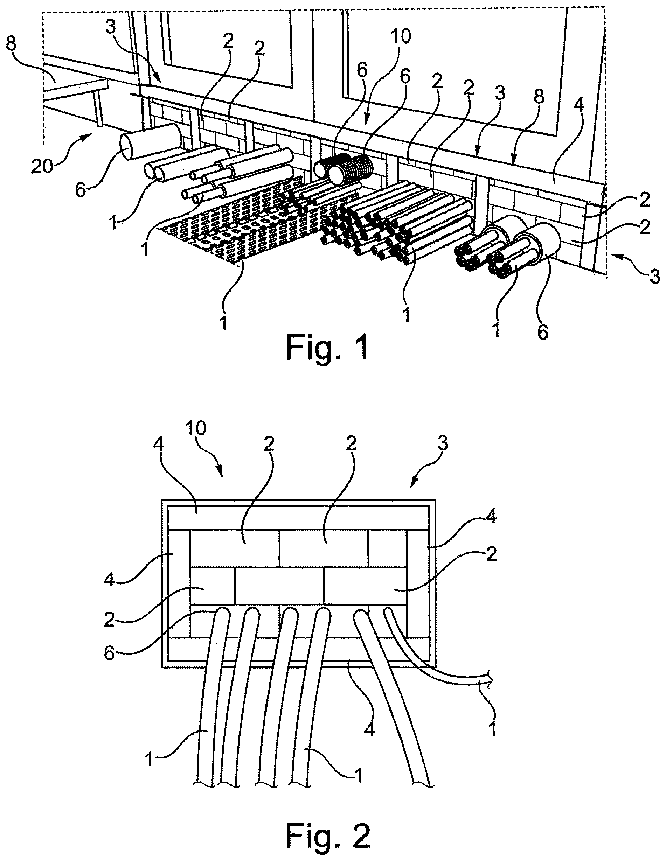

In der Fig. 1 ist in einer perspektivischen Ansicht ein erstes Ausführungsbeispiel einer erfindungsgemäßen Brandabschottung 10 im Anwendungsfall bei einem Doppelbodensystem 8 mit Hohlräumen 20 unterhalb einer Doppeltür gezeigt. Die Brandabschottung 10 besteht hier im Wesentlichen aus einem mindestens an drei Seiten, nämlich seitlich und oberhalb, vorgesehenen Rahmen 3 aus vertikalen und horizontal angeordneten Platten 4, welche auf Stoß oder Kante miteinander fest verbunden sind unter Auflage der horizontalen Platten 4, und in dem Rahmen 3 eingesetzten modulförmigen Brandschutzsteinen 2 mit Öffnungen für Rohre 1, Leitungen oder Kanälen. Die Brandschutzsteine 2 weisen eine für die baurechtlichen Vorschriften des Brandschutzes erforderliche hohe Feuerfestigkeit gemäß DIN 4102 (EN 13501-1) von beispielsweise F60, F90 oder F120 auf und sind als modulförmig zusammensetzbare Brandschutzsteine quaderförmig realisiert.

Die Brandschutzsteine 2 werden je nach Größe des geforderten Durchlasses flexibel auf den Bereich des Rahmens 3 aus den Platten 4 hin eingesetzt und miteinander durch Mörtel oder ähnliches oder durch alternativ auch direkt ohne extra Zwischenschicht aufgrund der Nachgiebigkeit des Materials fest und rauchdicht miteinander verbunden. Die Brandschutzsteine 2 werden vorab so bearbeitet, dass die jeweils erforderlichen Öffnungen, Bohrungen oder Hohlräume für Kabel, Kanäle oder Rohre 1 in der Brandabschottung 10 wie in Fig. 1 gezeigt hergestellt werden können.

Die Brandschutzsteine 2 weisen dabei einen höheren Brandschutz, Feuerwiderstand oder eine höhere Feuerfestigkeit gemäß DIN 4102 bzw. EN 13501 auf als die den Rahmen 3 bildenden äußeren Platten 4. Die Platten 4 sind bei diesem Ausführungsbeispiel zum Beispiel mit äußeren Blattschichten aus Calciumsulfat mit einer Mindestdicke von ≥ 40 mm vorgesehen, so dass sie sowohl in vertikaler als auch in horizontaler Anordnung auch bei derartigen Bodenhohlräumen 20 eine hinreichende Festigkeit und statisch wirksame Stabilität für diese Stelle des Gebäudebodens 8 haben. Die Platten 4 gemäß diesem Ausführungsbeispiel können erfindungsgemäß ferner in einem mehrschichtigen sandwichartigen Aufbau realisiert sein, nämlich mit einer über mindestens 80 % hin in der Dickenrichtung sich erstreckenden Innenschicht aus Calciumsulfat und an den Außenflächen vorgesehenen Schichten aus einem demgegenüber anderen Werkstoff, z. B. Karton, brandresistenten Mineralfasern, Kunststofffolie oder ähnlichem.

Die für die Leitungen 1 hergestellten Öffnungen 6 in den Brandschutzsteinen 2 der Brandabschottung 10 werden je nach Bedarf in kreisrunder Form durch Bohren oder durch Schneiden auch in rechteckiger Form, beispielsweise für Kanäle, hergestellt.

Nach dem Einsetzen der Leitungen 1, Kabel, Kanäle oder Rohre in die so hergestellte Brandabschottung 10 werden die noch teilweise vorhandenen Zwischenräume fakultativ mittels Zement oder brandschutzgesichertem Material verfüllt, so dass die Brandabschottung 10 insgesamt rauchdicht und feuerfest ist und die Bestimmungen für eine erhöhte Brandschutzklassifizierung nach den Sicherheitsvorschriften im Baugewerbe eingehalten werden. Alternativ können die Öffnungen 6 auch passgenau so realisiert sein, dass sie durch die Materialart der Brandschutzsteine 2 direkt mit den Rohren 1 eine dichte Verbindung bilden.

Durch den Rahmen 3 aus den so hergestellten horizontalen und vertikalen Platten 4 wird eine durchgängig ebene Oberfläche an den Außenseiten der Brandabschottung 10 oben ebenso seitlich hergestellt, welche eine direkte Anbindung für die Aufbringung eines Gebäudebodens 7, eines Doppelbodensystems 8 oder anderer angrenzender Bauelemente wie Zwischenwände, Zwischentüren etc. bietet. Die Rahmen 3 sind hinreichend selbst stabil, so dass keine zusätzlichen weiteren statisch wirksamen metallischen Streben oder Stützen in dem Gebäudehohlraum 20 für ein solches Doppelbodensystem mehr benötigt werden.

Die Fig. 2 zeigt in einer Draufsicht ein weiteres Anwendungsbeispiel einer erfindungsgemäßen Ausführungsform einer Brandabschottung 10 mit einem auf sämtlichen vier Seiten vorgesehenen Rahmen 3, d. h. mit horizontalen unteren und oberen Platten 4, welche auf den Stirnseiten der vertikalen Platten 4 aufliegen. Auch bei diesem Ausführungsbeispiel ist der Rahmen 3 aus auf Kante oder Stoß miteinander fest verbundenen Platten 4 aus Calciumsulfat realisiert und kann flexibel auf die entsprechende Größe hin an Ort und Stelle zugesägt und montiert werden. Eine feste Verbindung der Platten 4 kann beispielsweise mittels Schrauben oder Nägeln oder durch Haftschichten hergestellt werden. Die im Inneren des Rahmens 3 vorgesehenen modulförmigen Brandschutzsteine 2 werden mit entsprechenden Öffnungen 6 je nach Bedarf versehen, wobei diese leicht in den Brandschutzsteinen 2 hergestellt werden können, beispielsweise durch Bohren. Die Platten 4 weisen auch bei diesem Ausführungsbeispiel einen mindestens dreischichtigen sandwichartigen Aufbau mit einer inneren dickeren Schicht von mindestens 80 % der Dicke aus Calciumsulfat und äußeren Schichten aus anderem Material, beispielsweise Mineralstoff, Kunststoff, Karton (Papier) etc., auf.

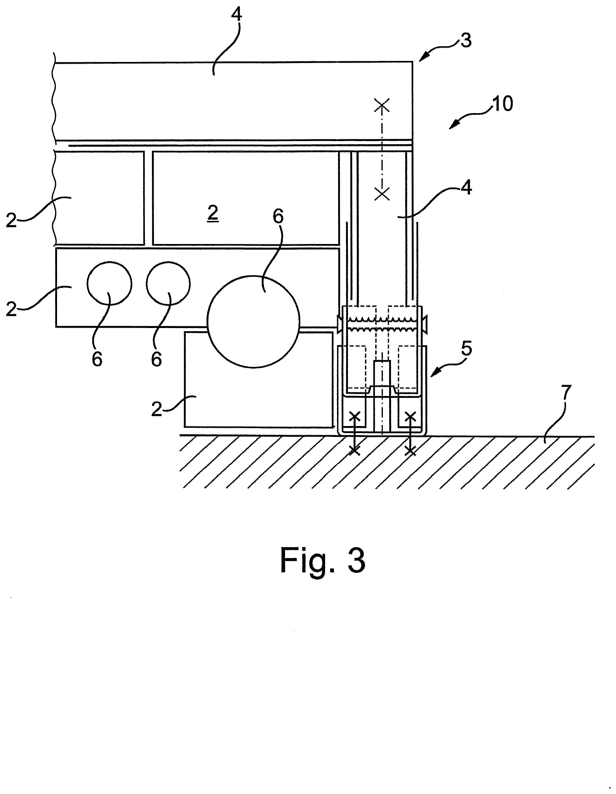

In der Fig. 3 ist in einer teilweisen Draufsicht ein weiteres Ausführungsbeispiel einer erfindungsgemäßen Brandabschottung 10 gezeigt. Im Unterschied zu den vorherigen Ausführungsbeispielen sind hier die vertikalen Platten 4 des Rahmens 3 mit einem vorzugsweise metallischen Profil 5 an dem Gebäudeboden 7 fest fixiert, z. B. mittels Schrauben. Das Profil 5 weist bei diesem Ausführungsbeispiel eine im Wesentlichen U-Form mit mehreren Teilen auf, um eine Höhenverstellbarkeit der vertikal angeordneten Platten 4 des Rahmens 3 für die Anpassung auf die entsprechende Höhe der am Gebäudeboden bzw. dem Hohlraum 20 vorzusehenden Brandabschottung 10 leicht realisieren zu können. Auch ist hierdurch das Profil 5 bei diesem Ausführungsbeispiel so mit einer Höhenverstellung versehen, dass keine seitlich über die Platten 4 vorragenden Elemente vorhanden sind. Auf diese Weise kann die Einpassung von Brandschutzsteinen 2 und Anbindung an angrenzende Wandbereiche leicht auf der Baustelle realisiert werden.

Die feste Fixierung zwischen einerseits den horizontalen Platten 4 und den vertikalen Platten 4 des Rahmens 3 und andererseits dem Profil 5 am Gebäudeboden kann beispielsweise über schematisch illustrierte Schrauben hergestellt werden und bietet den Vorteil, dass auch bei nur dreiseitig vorgesehenem Rahmen 3 eine sichere und statisch stabile Fixierung der Brandabschottung nach Art einer Brückenkonstruktion oder Bogenstruktur mit den modulförmig und flexibel darin eingesetzten Brandschutzsteinen 2 ermöglicht wird.

Bei den gezeigten Ausführungsbeispielen gemäß Fig. 1 bis Fig. 3 ist vorzugsweise die Brandabschottung 10 mit vertikalen Platten 4 des Rahmens 3 so versehen, dass ein Abstand zwischen vertikalen Platten 4 zur Aufnahme von Brandschutzsteinen 2 von maximal 500 mm, vorzugsweise 350 mm bis 450 mm bzw. insbesondere vorzugsweise 385 mm gegeben ist. Mit einer beispielsweise Mindestdicke von 40 mm der Platten 4 in horizontaler Lage kann so eine ausreichende Festigkeit und Steifigkeit der gesamten Brandabschottung für die herkömmlichen Anwendungen im Baubereich gewährleistet werden. Es hat sich gezeigt, dass hierdurch eine ausreichend hohe Druckbelastbarkeit der Brandabschottung insgesamt ermöglicht wird, nämlich im Bereich von bis zu 4 kN an einer Bruchlast gemäß der Norm DIN EN 4103. Bei der gesamten Bruchfestigkeit und statischen Stabilität der Brandabschottung 10 gemäß der Erfindung ist zu berücksichtigen, dass diese nur aufgrund der aus nichtmetallischen Materialen gebildeten Platten 4 der Rahmen 3 sowie der ebenfalls nichtmetallischen und einer hohe Brandschutzklasse aufweisenden Brandschutzsteine 2 erreicht wird. Die erfindungsgemäße Vorrichtung ist dadurch als mit relativ wenigen Elementen realisierbare und dennoch konstruktiv und der Verarbeitung leicht verwendbare Konstruktion gebildet.

Die Brandabschottung 10 gemäß der Erfindung ist ideal in sogenannten Doppelbodensystemen einsetzbar oder aber auch in einfachen Durchbrüchen von Mauerwänden, bei welchen ein rechteckiger Durchbruch in Zwischenwänden von Gebäuden herstellt wird (vgl. Fig. 2). Die verschiedenen Aspekte und Merkmale der Erfindung, welche zu den einzelnen Ausführungsbeispielen der Fig. 1, der Fig. 2 und der Fig. 3 jeweils beschrieben sind, können in technischer Hinsicht auch beliebig miteinander kombiniert werden. Beispielsweise können anstatt von einem modulartigen Brandschutzstein 2 auch eine Mehrzahl von Brandschutzsteinen für Durchlässe oder Öffnungen 6 von Rohren 1 vorhanden sein. Es kann auch nur ein einziger Brandschutzstein 2 vorhanden sein. Die torartige dreiseitige Anordnung von vertikalen Platten 4 und horizontal darüber direkt aufliegenden Platten 4, welche übergreifend über mehreren vertikalen Platten gemäß der Fig. 1 auch vorgesehen sein können, können auch eine bodenseitige horizontale Platte 4 für ein Vervollständigen eines allseitig vorgesehenen Rahmens 3 gemäß der Erfindung für die Brandabschottung 10 versehen sein. Die Materialen der Brandschutzsteine 2 wie auch diejenigen der Platten 4 des Rahmens 3 können variieren, solange es sich um nichtmetallische, brandhemmende oder im zumindest gewissen Maße feuerfeste Materialen handelt.

### Bezugszeichenliste

- 1: Leitungen, Kabel, Kanäle oder Rohre
- 2: Brandschutzstein
- 3: Rahmen
- 4: Platte
- 5: Profil
- 6: Öffnungen
- 7: Gebäudeboden
- 8: Bodenfläche bzw. Bodensystem
- 10: Brandabschottung
- 20: Bodenhohlraum (z. B. Doppelboden)

## Patentansprüche

1. Brandabschottung (10) für Hohlräume oder Durchlässe in Gebäuden oder Gebäudewänden, insbesondere Bodenhohlräumen (20) von Doppelböden, zum Durchführen von Leitungen (1), Kabeln, Kanälen oder Rohren mit mindestens einem modulförmigen, quaderartigen Brandschutzstein (2), in welchem auf die Leitungen (1) im Durchmesser angepasste Öffnungen in einer je nach Bedarf erforderlichen Form, Anzahl und Position herstellbar sind, und mit einem äußeren Rahmen (3), welcher den oder die Brandschutzsteine (2) mindestens an drei Seiten abschließt und aufnimmt, wobei der Rahmen (2) aus auf Stoß oder Kante direkt miteinander verbundenen Platten (4) mindestens seitlich und von oben her gebildet ist, wobei horizontale Platten (4) mindestens bereichsweise auf vertikalen Platten (4) aufliegen und dass sowohl der Rahmen (3) als auch die Brandschutzsteine (2) aus einem nicht-metallischen feuerfesten Material, insbesondere einem mineralischen Werkstoff, bestehen, **dadurch gekennzeichnet, dass** die direkt miteinander verbundenen Platten eine höhere Biegesteifigkeit und/oder Druckfestigkeit als die darin vorgesehenen Brandschutzsteine zur statischen Abstützung aufweisen.

2. Brandabschottung (10) nach Anspruch 1, **dadurch gekennzeichnet, dass** die Platten (4) des Rahmens (3) und die modulförmig darin eingesetzten Brandschutzsteine (2) luftdicht miteinander verbunden.

3. Brandabschottung (10) nach Anspruch 1 oder 2, **dadurch gekennzeichnet, dass** die Platten (4) des Rahmens (2) einen mehrschichtigen sandwichförmigen Aufbau mit einer Schicht aus Calciumsulfat in der Mitte über mindestens 80 % der Dicke aufweisen.

4. Brandabschottung (10) nach einem der vorangegangenen Ansprüche, **dadurch gekennzeichnet, dass** die Platten **(4)** des Rahmens (3) eine materialbezogene Zusammensetzung mit einer niedrigeren Brandschutzklasse als derjenigen des mindestens einen Brandschutzsteins (2) haben.

5. Brandabschottung (10) nach einem der vorangegangenen Ansprüche, **dadurch gekennzeichnet, dass** mindestens ein gebäudeseitig fixiertes Profil (5) zur Fixierung des Rahmens (3) in einer U- oder H-Form vorgesehen ist, welches vorzugsweise höhenverstellbar zur Anpassung der Form und Position des Rahmens (3) ist.

6. Brandabschottung (10) nach einem der vorangegangenen Ansprüche, **dadurch gekennzeichnet, dass** der Rahmen (3) mit Platten (4) von einer Dicke von mindestens 40 mm für die horizontal eingebauten Platten (4) gebildet ist, wobei die Dicke von vertikalen Platten (4) demgegenüber geringer ist.

7. Brandabschottung (10) nach einem der vorangegangenen Ansprüche, **dadurch gekennzeichnet, dass** die Brandschutzsteine (2) aus modulförmig stapelbaren und anpassbaren Quadern aus insbesondere porösem Material gebildet sind, welche mit Durchlässen oder Öffnungen (6) für die Leitungen (1) versehen sind oder flexibel versehen werden können.

8. Brandabschottung (10) nach einem der vorangegangenen Ansprüche, **dadurch gekennzeichnet, dass** die äußeren Oberflächen des Rahmens (3) eine durchgängig glatte und ebene Fläche zur Anbindung an Bodensysteme oder Bodenflächen (8), insbesondere für Doppelböden oder in Türdurchgängen, aufweisen.

## Claims

1. Fire barrier (10) for cavities or passages in buildings or building walls, in particular floor cavities (20) of raised floors, for the passage of conduits (1), cables, channels or pipes with at least one modular, cuboidal fire protection brick (2), in which openings adapted in diameter to the conduits (1) can be produced in a form, number and position as required, and with an outer frame (3), which closes off and receives the fire protection brick(s) (2) on at least three sides,
wherein the frame (2) is formed from plates (4) connected directly to one another at an abutment or edge, at least laterally and from above,
wherein horizontal plates (4) rest at least in regions on vertical plates (4) and both the frame (3) and the fire protection bricks (2) consist of a non-metallic fireproof material, in particular a mineral material, **characterised in that** the directly connected plates have a higher flexural stiffness and/or compressive strength than the fire protection bricks provided therein for static support.

2. Fire barrier (10) according to claim 1, **characterised in that** the plates (4) of the frame (3) and the fire protection bricks (2) inserted therein in the form of modules are connected to one another in an airtight manner.

3. Fire barrier (10) according to claim 1 or 2, **characterised in that** the plates (4) of the frame (2) have a multilayer sandwich-shaped structure with a layer of calcium sulphate in the centre over at least 80% of the thickness.

4. Fire barrier (10) according to any of the preceding claims, **characterised in that** the plates (4) of the frame (3) have a material-based composition with a lower fire protection class than that of the at least one fire protection brick (2).

5. Fire barrier (10) according to any of the preceding claims, **characterised in that** at least one profile (5) fixed on the building side is provided for fixing the frame (3) in a U- or H-shape, which is preferably height-adjustable for adapting the shape and position of the frame (3).

6. Fire barrier (10) according to any of the preceding claims, **characterised in that** the frame (3) with plates (4) is formed with a thickness of at least 40 mm for the horizontally installed plates (4), the thickness of vertical plates (4) being smaller in comparison.

7. Fire barrier (10) according to any of the preceding claims, **characterised in that** the fire protection bricks (2) are formed from modularly stackable and adaptable cuboids made in particular of porous material, which are provided with passages or openings (6) for the conduits (1) or can be provided flexibly.

8. Fire barrier (10) according to any of the preceding claims, **characterised in that** the outer surfaces of the frame (3) have a continuously smooth and flat surface for connection to floor systems or floor surfaces (8), in particular for raised floors or in doorways.

## Revendications

1. Cloisonnement coupe-feu (10) pour cavités ou passages dans des bâtiments ou murs de bâtiments, en particulier cavités de sol (20) de faux-planchers, pour faire passer des conduites (1), des câbles, des canaux ou des tuyaux, comprenant au moins une brique coupe-feu (2) modulaire, de forme parallélépipédique, dans laquelle peuvent être réalisées des ouvertures adaptées au diamètre des conduites (1), selon la forme, le nombre et la position requis, et comprenant un cadre extérieur (3) qui ferme et reçoit la ou les briques coupe-feu (2) sur au moins trois côtés, le cadre (3) étant formé au moins latéralement et par le haut de plaques (4) reliées directement entre elles par leurs bords ou leurs arêtes, les plaques horizontales (4) reposant au moins par endroits sur des plaques verticales (4), et en ce que tant le cadre (3) que les briques coupe-feu (2) sont constitués d'un matériau non métallique résistant au feu, en particulier d'un matériau minéral, **caractérisé en ce que** les plaques directement reliées entre elles présentent une rigidité à la flexion et/ou une résistance à la compression supérieures à celles des briques coupe-feu prévues à l'intérieur pour le soutien statique.

2. Cloisonnement coupe-feu (10) selon la revendication 1, **caractérisée en ce que** les plaques (4) du cadre (3) et les briques coupe-feu (2) modulaires qui y sont insérées sont reliées entre elles de manière étanche à l'air.

3. Cloisonnement coupe-feu (10) selon la revendication 1 ou 2, **caractérisée en ce que** les plaques (4) du cadre (3) présentent une structure multicouche de type sandwich avec une couche de sulfate de calcium au centre sur au moins 80 % de l'épaisseur.

4. Cloisonnement coupe-feu (10) selon l'une des revendications précédentes, **caractérisée en ce que** les plaques (4) du cadre (3) ont une composition matérielle avec une classe de protection incendie inférieure à celle d'au moins une brique coupe-feu (2).

5. Cloisonnement coupe-feu (10) selon l'une des revendications précédentes, **caractérisée en ce qu'**au moins un profilé (5) fixé du côté du bâtiment est prévu pour la fixation du cadre (3) sous une forme en U ou en H, lequel est de préférence réglable en hauteur pour adapter la forme et la position du cadre (3).

6. Cloisonnement coupe-feu (10) selon l'une des revendications précédentes, **caractérisée en ce que** le cadre (3) est formé de plaques (4) d'une épaisseur d'au moins 40 mm pour les plaques (4) installées horizontalement, l'épaisseur des plaques verticales (4) étant en revanche inférieure.

7. Cloisonnement coupe-feu (10) selon l'une des revendications précédentes, **caractérisée en ce que** les briques coupe-feu (2) sont formées de blocs parallélépipédiques modulaires empilables et adaptables, en particulier en matériau poreux, qui sont pourvus de passages ou d'ouvertures (6) pour les conduites (1) ou peuvent être pourvus de manière flexible.

8. Cloisonnement coupe-feu (10) selon l'une des revendications précédentes, **caractérisée en ce que** les surfaces extérieures du cadre (3) présentent une surface continue lisse et plane pour le raccordement à des systèmes de sol ou à des surfaces de sol (8), en particulier pour des faux-planchers ou dans des passages de porte.
